# EUROPÄISCHE PATENTSCHRIFT

(11) **EP 2 885 836 B1**
(45) Veröffentlichungstag und Bekanntmachung des Hinweises auf die Patenterteilung: **02.11.2016**
(21) Anmeldenummer: 13763024.0
(22) Anmeldetag: 10.09.2013
(51) Int. Cl.: H01M 12/02, H01M 12/08, H01M 8/02

(54) **ELEKTRISCHER ENERGIESPEICHER**
ELECTRICAL ENERGY STORE
ACCUMULATEUR D'ÉNERGIE ÉLECTRIQUE

(30) Priorität: 25.09.2012 DE 102012217290
(43) Veröffentlichungstag der Anmeldung: 24.06.2015
(73) Patentinhaber: Siemens Aktiengesellschaft, 80333 München (DE)
(72) Erfinder: DRENCKHAHN, Wolfgang, 91058 Erlangen (DE); GREINER, Horst, 91301 Forchheim (DE); KELLNER, Norbert, 91077 Kleinsendelbach (DE); LANDES, Harald, 90607 Rückersdorf (DE); REICHENBACHER, Roland, 96193 Wachenroth (DE)
(86) Internationale Anmeldenummer: PCT/EP2013/068710
(87) Internationale Veröffentlichungsnummer: WO 2014/048724

(56) Entgegenhaltungen:
- WO-A1-2012/123259
- WO-A2-03/001617
- WO-A2-2013/110509
- US-A1- 2011 033 769

## Beschreibung

Die Erfindung betrifft einen elektrischen Energiespeicher nach Anspruch 1.

Zur Speicherung von überschüssigen elektrischen Strom, der beispielsweise bei der Stromerzeugung durch erneuerbare Energienquellen oder durch Kraftwerke anfällt, die im Bereich des optimalen Wirkungsgrades betrieben werden und für den temporär kein Bedarf im Netz besteht, werden verschiedene technische Alternativen angewandt. Eine davon ist die wieder aufladbare Oxidbatterie (Rechargeable Oxide Battery, ROB). ROBs werden üblicherweise bei Temperaturen zwischen 600°C und 800°C betrieben. Hierbei wird Sauerstoff, der an einer Luftelektrode der elektrischen Zelle zugeführt wird in Sauerstoffionen umgewandelt, durch einen Festkörperelektrolyten transportiert und zur gegenüberliegenden Speicherelektrode gebracht. Dort findet eine Redoxreaktion statt, die je nach Lade- oder Entladeprozess elektrischen Strom aufnimmt oder erzeugt. Aufgrund der hohen benötigten Temperaturen für diesen Prozess ist die Werkstoffauswahl für die verwendeten Zellenwerkstoffe und die Konstruktion der Zellenteile sowie die Anordnung des Speichermediums sehr komplex. Insbesondere leiden die einzelnen Komponenten nach mehreren Redoxzyklen, die bei den besagten Betriebstemperaturen betrieben werden.

WO 2012/123259 A1 beschreibt einen Energiespeicher in Form einer aufladbaren Oxidbatterie nach dem Stand der Technik.

Aufgabe der Erfindung ist es daher, einen elektrischen Energiespeicher bereitzustellen, der gegenüber dem Stand der Technik eine höhere Zuverlässigkeit bei konstanten Energieaufnahmekapazitäten aufweist.

Die Lösung der Aufgabe besteht in einem elektrischen Energiespeicher nach dem Oberbegriff des Patentanspruchs Der erfindungsgemäße Energiespeicher nach Patentanspruch 1 umfasst mindestens eine Speicherzelle, die gegebenenfalls Bestandteil eines Stacks sein kann, wobei die Speicherzelle eine Luftelektrode und eine Speicherelektrode umfasst und wobei an der Speicherelektrode Kanäle angrenzen, in denen einerseits ein Speichermedium positioniert ist, und in denen zudem Wasserdampf insbesondere ein Wasserdampf/Wasser-Gemisch enthalten ist. Der Energiespeicher zeichnet sich dadurch aus, dass die Kanäle eine größere Querschnittsfläche aufweisen als der Querschnitt des darin enthaltenen Speichermediums. Dies bewirkt, dass zwischen der Speicherelektrode und dem Speichermedium entlang des Kanales ein zusätzlicher Raum geschaffen ist, der im Weiteren als Gaskanal bezeichnet wird.

Dieser Gaskanal hat mehrere vorteilhafte Wirkungen. Da sich in diesem Gaskanal ein Shuttlegas, das insbesondere Wasserstoff und Wasser enthält, und auf das noch im Weiteren näher eingegangen werden wird, frei strömen und diffundieren kann, führt dazu, dass alle Bereiche, auch Bereiche in der Kanalmitte, stets homogen mit dem Shuttlegas, das z.B. zur anfänglichen Reduktion notwendig ist, versorgt werden. Eine homogene Versorgung des Speichermediums über die gesamte Kanallänge hin, sorgt für eine optimale Ausnutzung der gesamten Speicherkapazität der Energiespeicherzelle und somit des elektrischen Energiespeichers. Dies führt wiederum zu einer konstanten Energieaufnahmekapazität des Energiespeichers und nicht zuletzt zu einer höheren Lebensdauer. Ferner kann durch diese Gaskanäle ein Mangel an Shuttlegas ausgeglichen werden, der beispielsweise aus einer Undichtigkeit des gesamten Energiespeichers resultieren kann. Ferner kann bei Inbetriebsetzung bzw. bei Wartungsarbeiten des Energiespeichers von außen ein entsprechendes Reaktionsgas wie z. B. reiner Wasserstoff eingeführt werden, um eine gesamte Reduktion des Speichermediums zu erzielen, die bei der Abschaltung des Speichers vorteilhaft ist.

Es hat sich als zweckmäßig herausgestellt, wenn das Speichermedium beabstandet von der Speicherelektrode angeordnet ist, so dass sich der Gaskanal zwischen der Speicherelektrode und dem Speichermedium befindet.

Hierzu ist es wiederum zweckmäßig, eine Fixiervorrichtung vorzusehen, die das Speichermedium an den Kanalwänden fixiert. Unter einer Fixiervorrichtung wird grundsätzlich jedes Fixiermittel verstanden, das es ermöglicht, das Speichermedium so in den Kanälen anzuordnen, dass eine Beabstandung zur Speicherelektrode oder den Kanalwänden gewährleistet werden kann. Dies kann insbesondere auch eine Klemmvorrichtung, beispielsweise eine Hinterschneidung in den Kanälen oder eine mechanische Befestigung sein.

Es hat sich als zweckmäßig herausgestellt, dass die Fixiervorrichtung in Form eines Netzes, insbesondere eines metallischen Netzes ausgestaltet ist. Dieses metallische Netz besteht wiederum bevorzugt auf der Basis von Nickel. Das Netz verläuft dabei in den Kanälen im Wesentlichen parallel zur Speicherelektrode. Dabei ist es bevorzugt an zwei parallel zueinander verlaufenden Kanalwänden befestigt.

Die Befestigung des Netzes an den Kanalwänden kann beispielsweise durch ein Punktschweißverfahren erfolgen, es kann jedoch auch an einem Rahmen befestigt sein, der wiederum bevorzugt zwei Rahmenflanken aufweist, die parallel zu den Kanalwänden verlaufen und zwischen denen das Netz befestigt ist.

Die Querschnittsfläche der Kanäle ist bevorzugt mindestens 5 % größer als die Querschnittsfläche des Speichermediums. Das wiederum bedeutet, dass die Gaskanäle eine Querschnittsfläche aufweisen, die mindestens 5 % der Querschnittsfläche des Speichermediums beträgt. Dieser Kanalquerschnitt von mindestens 5 % des Speichermediums hat sich als zweckmäßig herausgestellt, um eine ausreichende Bewegungsfreiheit des Shuttlegases entlang des Gaskanals zu gewährleisten.

Ferner hat es sich als zweckmäßig herausgestellt, wenn das Speichermedium Diffusionskanäle aufweist, die einen Durchmesser von mehr als 0,5 mm aufweisen und die im Wesentlichen senkrecht zur Speicherelektrode verlaufen. Die bezüglich einer Porosität des Speichermediums makroskopischen Diffusionskanäle gewährleisten wiederum einen Gastransport des Shuttlegases auch in das Volumenmaterial des Speichermediums.

Weitere Merkmale und weitere vorteilhafte Ausgestaltungsformen der Erfindung sind anhand der folgenden Figuren näher erläutert. Hierbei handelt es sich lediglich um beispielhafte Ausgestaltungsformen, die keine Einschränkung des Schutzumfangs darstellen.

Dabei zeigen:
Figur 1 eine schematische Darstellung einer Zelle einer Rechargeable Oxide Battery,
Figur 2 eine Explosionsdarstellung eines Stacks von oben betrachtet,
Figur 3 eine Explosionsdarstellung des Stacks aus Figur 2 von unten betrachtet,
Figur 4 eine vergrößerte schematische Darstellung eines Querschnittes eines Kanals mit einem Speichermedium,
Figur 5 einen schematischen Querschnitt durch einen Kanal mit Fixiervorrichtung und
Figur 6 einen Querschnitt wie in Figur 5 mit einer Fixiervorrichtung in alternativer Ausgestaltungsform.

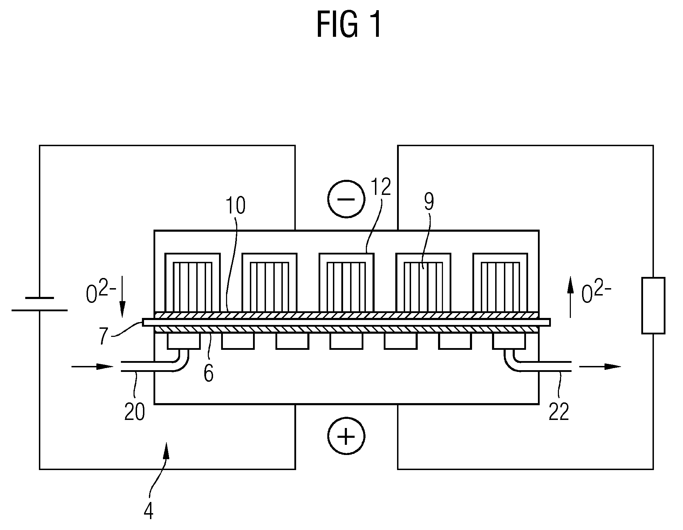

Anhand von Figur 1 soll zunächst schematisch die Wirkungsweise einer Rechargeable Oxide Batterie (ROB) beschrieben werden, insoweit dies für die vorliegende Beschreibung der Erfindung notwendig ist. Ein üblicher Aufbau einer ROB besteht darin, dass an einer positiven Elektrode 6, die auch als Luftelektrode bezeichnet wird, ein Prozessgas, insbesondere Luft, über eine Gaszufuhr 20 eingeblasen wird, wobei aus der Luft Sauerstoff entzogen wird. Der Sauerstoff gelangt in Form von Sauerstoffionen O²⁻ durch einen an der positiven Elektrode anliegenden Feststoffelektrolyten 7, zu einer negativen Elektrode 10, die auch als Speicherelektrode bezeichnet wird. Würde nun an der negativen Elektrode 10 also an der Speicherelektrode eine dichte Schicht des aktiven Speichermaterials vorliegen, so würde die Ladekapazität der Batterie schnell erschöpft werden.

Aus diesem Grund ist es zweckmäßig, an der negativen Elektrode 10 als Energiespeichermedium ein Speichermedium 9 aus porösem Material einzusetzen, das ein funktional wirkendes oxidierbares Material als ein aktives Speichermaterial, bevorzugt in Form von Eisen und Eisenoxid enthält.

Über ein, bei Betriebszustand der Batterie gasförmiges Redoxpaar, beispielsweise H₂/H₂O, werden die, durch den Festkörperelektrolyten 7 transportierten Sauerstoffionen durch Porenkanäle des porösen Speichermediums 9, die das aktive Speichermaterial umfasst, transportiert. Je nachdem ob ein Lade- oder Entladevorgang vorliegt, wird das Metall bzw. das Metalloxid (Eisen/Eisenoxid) oxidiert oder reduziert und der hierfür benötigte Sauerstoff durch das gasförmige Redoxpaar H₂/H₂O angeliefert oder zum Festkörperelektrolyten 7 zurück transportiert. Dieser Mechanismus wird als Shuttlemechanismus bezeichnet.

Der Vorteil des Eisens als oxidierbares Material, also als aktives Speichermaterial, besteht darin, dass es bei seinem Oxidationsprozess in etwa dieselbe Ruhespannung von etwa 1 V aufweist, wie das Redoxpaar H₂/H₂O.

Ein Vorteil der ROB besteht darin, dass sie durch ihre kleinste Einheit, nämlich der Speicherzelle 4 modular nahezu unbegrenzt erweiterbar ist. Somit ist eine kleine Batterie für den stationären Hausgebrauch ebenso darstellbar wie eine großtechnische Anlage zur Speicherung der Energie eines Kraftwerkes.

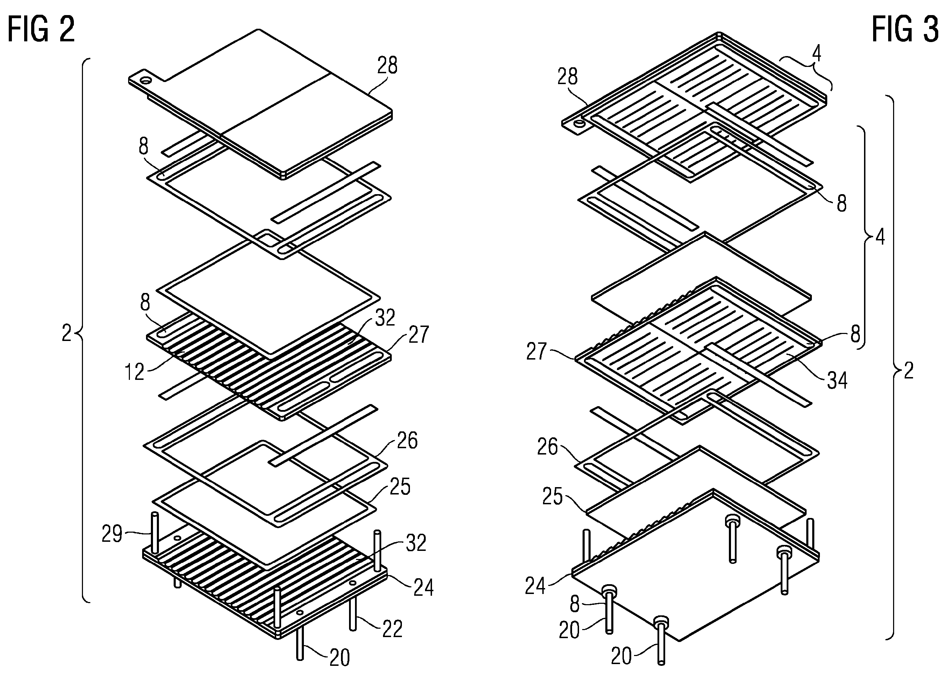

Mehrere der in Figur 1 beschriebenen Speicherzellen 4 sind zu einem sogenannten Stack 2 zusammengefasst. Der Aufbau eines Stacks 2 und die Anordnung der Speicherzellen 4 in dem Stack 2 ist anhand der Explosionsdarstellungen in Figur 2 und Figur 3 veranschaulicht. In Figur 2 ist der Aufbau eines Stacks dargestellt, der von oben betrachtet ist und hierbei in der Reihenfolge von unten nach oben zusammengesetzt wird. Der Stack 2 umfasst zunächst eine Bodenplatte 24, die gegebenenfalls aus mehreren Einzelplatten, die wiederum funktionale Strukturierungen und Vertiefungen beispielsweise zur Luftführung aufweisen, zusammengesetzt ist. Diese Zusammensetzung von Einzelplatten, die hier nicht näher beschrieben ist, zur Bodenplatte 24 erfolgt beispielsweise durch ein Hartlotverfahren.

Die Grundplatte 24 weist eine Luftzufuhr 20 sowie eine Luftabfuhr 22 auf, wie bereits beschrieben, sind durch die Zusammensetzung von Einzelplatten in der Bodenplatte 24 hier nicht sichtbare Kanäle zur Luftzufuhr integriert. Ferner weist die Bodenplatte 24 Zentrierbolzen 29 auf, auf die nun weitere Komponenten des Stacks 2 aufgebracht und zentriert werden. Als nächste Schicht folgt eine Elektrodenstruktur 25, die insbesondere die bereits beschriebene positive Elektrode 6, den Festkörperelektrolyten 7 sowie die Speicherelektrode 10 umfasst. Hierbei handelt es sich um eine selbsttragende keramische Struktur, auf die die einzelnen funktionalen Bereiche wie die Elektroden bzw. Festkörperelektrolyt in einem Dünnschichtverfahren aufgebracht sind.

Als weitere Schicht folgt eine Dichtung 26, die beispielsweise aus einer hochtemperaturbeständigen Glasfritte besteht, die die einzelnen Platten des Stacks 2 bei den Betriebstemperaturen der Batterie abdichtet. Die nächste folgende Platte ist eine sogenannte Interkonnektorplatte 27, die zwei funktional wirkende Seiten aufweist. Auf ihrer bezüglich Figur 2 gesehenen unteren Seite sind in diesem Beispiel eine Luftseite 34 einer Speicherzelle 4 und die hier nicht näher dargestellten Luftzufuhrkanäle eingebracht. Auf ihrer Oberseite (Speicherseite 32) weist die Interkonnektorplatte 27 Kanäle 12 auf, in die das Speichermedium 9 eingebracht ist. Die Oberseite der Interkonnektorplatte 27 in Figur 2 weist dieselbe Struktur auf wie die Oberseite der Grundplatte 24. Auch hier sind die Kanäle 12 zur Einbringung des Speichermediums 9 vorgesehen. Diese Seite mit den Kanälen 12 ist jeweils der Speicherelektrode 10 der Speicherzelle 4 zugewandt.

Exemplarisch ist in Figur 2 eine weitere Iteration der Folge von Elektrodenstruktur 25, Dichtung 26 und eine nun folgende Abschlussplatte 28 zum Gesamtaufbau des Stacks 2 dargestellt. Grundsätzlich können selbstverständlich noch eine Reihe weiterer Iterationen dieser Bauteile insbesondere mehrere Abfolgen von Interkonnektorplatten folgen, so dass ein Stack üblicherweise zwischen 10 und 20 Schichten von Speicherzellen 4 aufweist.

In Figur 3 ist derselbe Stack 2, der in der Figur 2 beschrieben ist, in umgekehrter Blickrichtung dargestellt. In Figur 3 blickt man von unten auf die Grundplatte 24, es folgt wiederum die Elektrodenstruktur 25 und die Dichtung 26, die Interkonnektorplatte 27 ist nun ebenfalls von unten sichtbar, wobei hierbei der Blick auf die Seite gelenkt ist, die der Luftelektrode zugewandt ist (Luftseite 34). In diesem Beispiel sind auf der Interkonnektorplatte vier getrennte Bereiche auf der Luftseite 34 dargestellt, die die Unterteilung in vier einzelne Speicherzellen 4 pro Stackschicht bilden (wobei die Unterteilung in vier Speicherzellen als rein exemplarisch anzusehen ist). Die Speicherzelle 4 setzt sich somit in diesem Beispiel aus einem Viertel der Fläche der jeweiligen Interkonnektorplatte bzw. der Grundplatte 24 bzw. der Deckplatte 28 zusammen. Ferner wird die jeweilige Zelle 4 durch eine Abfolge der jeweiligen Luftseite 34, Dichtung 26, Elektrodenstruktur 25 und wiederum jeweils ein Viertel der Speicherseite 32 der Grundplatte 24 bzw. der Interkonnektorplatte 27 gebildet. Die Luftseite 34 wird hierbei durch eine hier nicht näher dargestellte Luftzufuhrvorrichtung 8 (auch Manifold genannt), die dabei mehrere Komponenten im Stack umfasst, mit dem Prozessgas Luft versorgt.

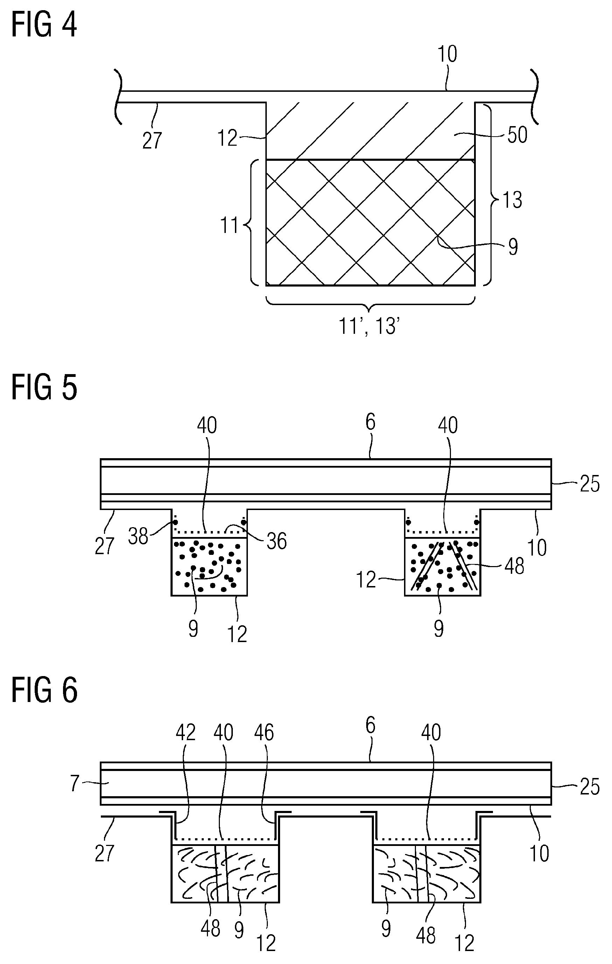

Wie bereits dargelegt erfolgt eine Oxidations- bzw. Reduktionsreaktion zwischen dem Shuttlegas, das üblicherweise aus einem Gemisch aus Wasserdampf und Wasserstoff besteht sowie dem Speichermedium, das ein Eisenoxid bzw. Eisen enthält. Um die Konzentration des Shuttlegas an jeder Stelle des Speichermediums möglichst konstant zu halten, womit eine kontinuierliche Reaktion des gesamten Speichermediums realisierbar ist, ist es zweckmäßig, gemäß Figur 4 das Speichermedium 9 derart in dem Kanal 12 anzuordnen, dass parallel zur Speicherelektrode 10 ein Gaskanal 50 entsteht, in dem sich das Shuttlegas möglichst ungehindert durch Diffusion und Strömung ausbreiten kann.

Hierbei weist der Kanal 12 insgesamt eine Querschnittsfläche auf, die sich aus den Längen unter den geschweiften Klammern 13 und 13' zusammensetzt. Das Speichermedium 9 weist hingegen einen kleineren Querschnitt auf, der sich aus den Längen unter den geschweiften Klammern 11 und 11' zusammensetzt, wobei die Länge 11' in dieser Ausgestaltungsform mit der Länge 13' gleichzusetzen ist. Somit bildet sich zwischen dem Speichermedium 9 und der Speicherelektrode 10 der Gasflusskanal 50 aus, in dem das Shuttlegas H₂O/H₂ ungehindert entlang des Speichermediums strömen und diffundieren kann, so dass an der Oberfläche des Speichermediums 9 ein konstanter Partialdruck des Shuttlegases vorliegt.

Um das Speichermedium 9 in den Kanälen 12 zu fixieren, ist eine Fixiervorrichtung vorgesehen, die grundsätzlich in unterschiedlichen Ausgestaltungsformen vorliegen kann. Beispielsweise können die Kanäle 12 hier nicht dargestellte Hinterschneidungen aufweisen, die das Speichermedium 9 an den gewünschten Ort im Kanal 12 einklemmt. Grundsätzlich können auch bewegliche Fixiernasen in den Kanälen 12 angeordnet sein, die ebenfalls eine Klemmwirkung bezüglich des Speichermediums 9 ausüben. Durch punktuelle Belastung auf das an sich spröde Material des Speichermediums 9 können jedoch ungewünschte Beschädigungen am Speichermedium 9 entstehen. Zudem kann es bei dem Speichermedium zu longitudinalen Ausdehnungen aufgrund der chemischen Umwandlung während des Betriebs der Speicherzelle kommen. In diesem Fall ist eine punktuelle Fixierung des Speichermediums 9 ebenfalls ungünstig, da sie mit erheblichen Druckbelastungen bzw. Druckspannungen im Speichermedium 9 verbunden sein kann. Daher hat es sich als zweckmäßig herausgestellt, im Kanal 12 ein Netz 40 anzubringen, das insbesondere auf Nickelbasis ausgestaltet ist, wobei dieses Netz eine gewisse Dehnbarkeit aufweist, und somit eine punktuelle Belastung des Speichermediums 9 unterbunden wird, wobei das Speichermedium 9 trotzdem ortsfest im Kanal 12 angeordnet ist. Dieses Netz 40 kann auch als Fixiervorrichtung 36 bezeichnet werden.

Unter dem Begriff Netz ist grundsätzlich ein Gewebe zu verstehen, das beispielsweise in Form eines Flechtgewebes jedoch auch in Form eines Strickwerkes oder Wirkwerkes ausgestaltet sein kann. Grundsätzlich werden auch einzelne gespannte Drähte, die zwischen den Kanalwänden 38 verlaufen, unter dem Begriff Netz subsummiert. Unabhängig von der Ausgestaltungsform des Netzes hat sich eine Maschenweite als sinnvoll herausgestellt, die zwischen 30 µm und 300 µm liegt, wobei die Drahtstärke bevorzugt zwischen 10 µm und 100 µm liegt. Bei der beschriebenen Maschenweite in der Verbindung mit der beschriebenen Drahtstärke wird das Speichermedium 9 sicher in den Kanälen gehalten, das Netz weist mit diesen Parametern eine ausreichend hohe Elastizität auf, wobei jedoch kein Material des Speichermediums 9 durch die Maschen hindurchwandert.

Wie in Figur 5 dargestellt, ist zwischen der Elektrodenstruktur 25, die in Richtung der Speicherseite 32 der Interkonnektorplatte 27 die Speicherelektrode 10 aufweist, an Wänden 38 der Kanäle 12 das Netz 40 durch eine Punktschweißung befestigt. Hierzu wird zunächst das Speichermedium 9 in die Kanäle 12 der Interkonnektorplatte 27 eingelegt, anschließend wird ein Netz über die Speicherseite 32 gezogen und in die Vertiefungen der Kanäle eingedrückt. Im weiteren Verlauf wird mit einem Punktschweißgerät in regelmäßigen Abständen längs der Kanäle jeweils eine entsprechende Anzahl von Schweißpunkten gesetzt, so dass das Netz 40 direkt auf dem Speichermedium 9 aufliegt und dieses ausreichend fest in die Kanäle 12 drückt, wobei das Netz genügend elastisch ist, um reaktionsbedingte und thermisch bedingte Volumenänderungen des Speichermediums zu kompensieren. Das Speichermedium 9 ist somit durch das Netz 40 in den Kanälen 12 an den Kanalwänden 38 fixiert.

In einer alternativen Ausgestaltung gemäß Figur 6 ist ein Rahmen 42 vorgesehen, der teilweise in die Kanäle 12 hineinragt, und an dessen Rahmenflanken 46 das Netz 40 befestigt ist. Der Rahmen 42 wird ebenfalls auf die Speicherseite 32 der Interkonnektorplatte 27 gelegt, es kann sich hierbei um einzelne Rahmen für jeden Kanal 12 bzw. einen Gesamtrahmen handeln, der die gesamte Interkonnektorplatte 27 abdeckt und jeweils einzelne Vertiefungen in den Kanälen 12 aufweist.

Des Weiteren kann es zweckmäßig sein, makroskopische Diffusionskanäle 48 im Speichermedium 9, beispielsweise durch Bohrungen oder Platzhalter beim Fertigungsprozess (auch Porformer), einzubringen. Unter dem Begriff makroskopisch wird hierbei verstanden, dass die Diffusionskanäle 48 gegenüber der üblichen Porosität des Speichermediums 9 einen mindestens zehnfachen Durchmesser aufweisen, so dass genügend Shuttlegas durch die Diffusionskanäle 48 tief ins Innere des Speichermediums 9 ungehindert strömen können. Diese Diffusionskanäle 48, die üblicherweise eine Ausdehnung von mehr als 0,5 mm aufweisen, verlaufen in ihrer Vorzugsrichtung bevorzugt von der Speicherelektrode 10 wegwärts. Dabei können sie senkrecht zur Speicherelektrode 10 stehen, wie dies in Figur 6 dargestellt ist oder sie können in Winkeln verlaufen, wie dies in Figur 5 dargestellt ist.

## Patentansprüche

1. Energiespeicher in Form einer aufladbaren Oxidbatterie mit mindestens einem Stack (2) mit jeweils mindestens einer Speicherzelle (4), die wiederum eine Luftelektrode (6) und eine Speicherelektrode (10) umfasst wobei die Speicherelektrode (10) an Kanäle (12) angrenzt, die ein Speichermedium (9) und Wasserdampf enthalten, **dadurch gekennzeichnet, dass** die Kanäle (12) eine größere Querschnittsfläche (13) aufweisen als der Querschnitt (11) des Speichermediums (9).

2. Elektrischer Energiespeicher nach Anspruch 1, **dadurch gekennzeichnet, dass** eine Fixiervorrichtung (36) zur Fixierung des Speichermediums (9) an Kanalwänden (38) vorgesehen ist.

3. Elektrischer Energiespeicher nach Anspruch 2, **dadurch gekennzeichnet, dass** das Speichermedium (9) in den Kanäle (12) durch die Fixiervorrichtung (36) so fixiert ist, dass es von der Speicherelektrode (10) beabstandet angeordnet ist.

4. Energiespeicher nach Anspruch 1 oder 2, **dadurch gekennzeichnet, dass** die Fixiervorrichtung (36) in Form eines Netzes (40), insbesondere eines metallischen Netzes (40) ausgestaltet ist.

5. Energiespeicher nach einem der vorhergehenden Ansprüche **dadurch gekennzeichnet, dass** das Netz (40) auf der Basis von Nickel besteht.

6. Energiespeicher nach Anspruch 4, **dadurch gekennzeichnet, dass** die Querschnittsfläche (13) der Kanäle (12) mindestens 5 % größer ist als die Querschnittsfläche (11) des Speichermediums (9).

7. Energiespeicher nach einem der vorhergehenden Ansprüche, **dadurch gekennzeichnet, dass** das Netz (40) entlang des Kanals (12) parallel zur Speicherelektrode (10) angeordnet ist.

8. Energiespeicher nach einem der vorhergehenden Ansprüche, **dadurch gekennzeichnet, dass** das Netz (40) an einem Rahmen (42) angeordnet ist, der zumindest teilweise mit zwei parallel zu Kanalwände (44) verlaufenden Rahmenflanke (46) und das Netz zwischen den beiden Rahmenflanken (46) befestigt ist.

9. Energiespeicher nach einem der vorhergehenden Ansprüchen, **dadurch gekennzeichnet, dass** im Speichermedium (9) Diffusionskanäle (48) vorgesehen sind, die einen Durchmesser von mehr als 0,5 mm aufweisen und die senkrecht zu Speicherelektrode (10) verlaufen.

## Claims

1. Energy store in the form of a rechargeable oxide battery having at least one stack (2) in each case with at least one storage cell (4) which in turn comprises an air electrode (6) and a storage electrode (10), the storage electrode (10) being adjacent to ducts (12) which contain a storage medium (9) and steam, **characterized in that** the ducts (12) have a larger cross-sectional area (13) than the cross section (11) of the storage medium (9).

2. Electrical energy store according to Claim 1, **characterized in that** a fixing device (36) is provided for fixing the storage medium (9) to duct walls (38).

3. Electrical energy store according to Claim 2, **characterized in that** the storage medium (9) is fixed in the ducts (12) by the fixing device (36) such that it is arranged at a distance from the storage electrode (10).

4. Energy store according to Claim 1 or 2, **characterized in that** the fixing device (36) is configured in the form of a net (40), in particular of a metallic net (40).

5. Energy store according to one of the preceding claims, **characterized in that** the net (40) is nickel-based.

6. The energy store according to Claim 4, **characterized in that** the cross-sectional area (13) of the ducts (12) is at least 5% larger than the cross-sectional area (11) of the storage medium (9).

7. Energy store according to one of the preceding claims, **characterized in that** the net (40) is arranged parallel to the storage electrode (10) along the duct (12).

8. Energy store according to one of the preceding claims, **characterized in that** the net (40) is arranged on a frame (42) which is fastened at least partially to two frame flanks (46) running parallel to duct walls (44), and the net is fastened between the two frame flanks (46).

9. Energy store according to one of the preceding claims, **characterized in that**, in the storage medium (9), diffusion ducts (48) are provided, which have a diameter of more than 0.5 mm and which run perpendicularly to the storage electrode (10).

## Revendications

1. Accumulateur d'énergie sous la forme d'une batterie d'oxyde rechargeable comprenant au moins un empilement ( 2 ) ayant respectivement au moins une cellule ( 4 ) d'accumulateur, qui comprend à son tour une électrode ( 6 ) d'air et une électrode ( 10 ) d'accumulateur, l'électrode ( 10 ) d'accumulateur étant voisine de conduits ( 12 ) qui contiennent un milieu ( 9 ) accumulateur et de la vapeur d'eau, **caractérisé en ce que** les conduits ( 12 ) ont une surface ( 13 ) de section transversale plus grande que la section ( 11 ) transversale du milieu ( 9 ) accumulateur.

2. Accumulateur d'énergie électrique suivant la revendication 1, **caractérisé en ce qu'**il est prévu un dispositif ( 36 ) d'immobilisation pour immobiliser le milieu ( 9 ) accumulateur sur des parois ( 38 ) de conduit.

3. Accumulateur d'énergie électrique suivant la revendication 2, **caractérisé en ce que** la milieu ( 9 ) accumulateur est immobilisé dans les conduits ( 12 ) par le dispositif ( 36 ) d'immobilisation de manière à être à distance de l'électrode ( 10 ) d'accumulateur.

4. Accumulateur d'énergie suivant la revendication 1 ou 2, **caractérisé en ce que** le dispositif ( 36 ) d'immobilisation est sous la forme d'un réseau ( 40 ), notamment d'une grille ( 40 ) métallique.

5. Accumulateur d'énergie suivant l'une des revendications précédentes, **caractérisé en ce que** le réseau ( 40 ) est à base de Nickel.

6. Accumulateur d'énergie suivant la revendication 4, **caractérisé en ce que** la surface ( 13 ) de section transversale des conduits ( 12 ) est plus grande d'au moins 5% que la surface ( 11 ) de section transversale du milieu ( 9 ) accumulateur.

7. Accumulateur d'énergie suivant l'une des revendications précédentes, **caractérisé en ce que** le réseau ( 40 ) est disposé le long du conduit ( 12 ) parallèlement à l'électrode ( 10 ) d'accumulateur.

8. Accumulateur d'énergie suivant l'une des revendications précédentes, **caractérisé en ce que** le réseau ( 40 ) est monté sur un cadre ( 42 ) qui est fixé au moins partiellement avec deux flancs ( 46 ) s'étendant parallèlement aux parois ( 44 ) du conduit et le réseau entre les deux flancs ( 46 ).

9. Accumulateur d'énergie suivant l'une des revendications précédentes, **caractérisé en ce qu'**il est prévu dans le milieu ( 9 ) d'accumulateur des conduits ( 48 ) de diffusion qui ont un diamètre de plus de 0,5 mm et qui sont perpendiculaires à l'électrode ( 10 ) d'accumulateur.
